# EUROPEAN PATENT APPLICATION

(11) **EP 3 640 483 A1**
(43) Date of publication of application: **22.04.2020**
(21) Application number: 17913259.2
(22) Date of filing: 14.06.2017
(51) Int. Cl.: F16B 5/02, B66B 7/02, F16B 39/24

(54) **BRACKET SUPPORT DEVICE**

(71) Applicant: Hitachi, Ltd., Tokyo 100-8280 (JP)
(72) Inventor: TASHIRO Masaki, Tokyo 100-8280 (JP); NAKAYAMA Tetsuya, Tokyo 100-8280 (JP); KANAYAMA Yasuhiro, Tokyo 100-8280 (JP)
(74) Representative: MERH-IP Matias Erny Reichl Hoffmann Patentanwälte PartG mbB
(86) International application number: PCT/JP2017/021992
(87) International publication number: WO 2018/229907

(57) **Abstract**

The present invention provides a bracket support structure capable of preventing a fixing bolt from being loosened over time to remove need for periodic inspection work on loosening of the fixing bolt or increase an interval for performing the inspection work. In order to achieve such an object, a bracket support device, which fixes a first bracket and a second bracket by a fixing bolt and a nut screwed to the fixing bolt, includes: a fixing bolt slotted hole to which the fixing bolt is inserted and which is formed in the first bracket so as to extend in a position adjustment direction; an anti-loosening slotted hole formed in the first bracket along the fixing bolt slotted hole; and a washer arranged between the first bracket and the nut, and the washer is provided with a locking portion to be locked with the anti-loosening slotted hole.

## Description

### Technical Field

The present invention relates to a bracket support device.

### Background Art

JP 2003-48673 A (PTL 1) discloses a background technique in this technical field. This publication describes a technique in which a rail-side bracket to which a guide rail of an elevator is fixed and a wall-side bracket fixed in a hoistway are provided, the rail-side bracket is pinched using a clip member provided on the wall-side bracket such that the rail-side bracket is slidable. In addition, JP H4-80253 U (PTL 2) describes a technique in which a part of a washer is bent downward to be locked with a groove, and a part of the washer is bent upward to come into contact with one side of a nut so as to prevent the nut from rotating.

### Citation List

### Patent Literature

PTL 1: JP 2003-48673 A
PTL 2: JP H4-80253 U

### Summary of Invention

### Technical Problem

Since a bolt is used for fixing between the wall-side bracket and the rail-side bracket in the technique described in PTL 1, the bolt is loosened due to vibrations caused by the operation of the elevator so that it is necessary to check the looseness of the bolt by inspection work or the like. In order to solve such a problem, for example, a technique in which a part of the washer is folded upward to come into contact with one side of the nut is proposed as described in PTL 2.

In the technique described in PTL 2, however, it is difficult to adjust a position and work is difficult at the time of newly attaching a new device or the like because attachment positions of the bolt and nut are fixed although prevention of loosening of the nut has been considered.

In addition, when tightening the nut, it is necessary to stop the nut in a state where positions are aligned such that one side of the nut is in contact with the folded portion of the washer in order to prevent the nut from being loosened. Thus, a sufficient tightening torque is not applied to the nut or an excessive tightening torque is applied to the nut so that it is difficult to tighten the nut with an appropriate torque load. For example, if the elevator is operated in such a state, there is a concern that vibrations may occur due to the insufficient tightening torque or the bolt may be damaged by the excessive tightening torque.

A first object of the present invention is to provide a bracket support device that prevents anti-loosening of a nut and improves attachment workability of a device or the like.

In addition, a second object of the present invention is to provide a bracket support device capable of preventing loosening of a nut regardless of a tightening stop position of the nut.

### Solution to Problem

In order to achieve the first object, the present invention is characterized by a bracket support device, which fixes a first bracket and a second bracket by a fixing bolt and a nut screwed to the fixing bolt, including: a fixing bolt slotted hole to which the fixing bolt is inserted and which is formed in the first bracket so as to extend in a position adjustment direction; an anti-loosening slotted hole formed in the first bracket along the fixing bolt slotted hole; and a washer arranged between the first bracket and the nut, the washer having a locking portion to be locked with the anti-loosening slotted hole.

In order to achieve the second object, the present invention is characterized by a bracket support device, which fixes a first bracket and a second bracket by a fixing bolt and a nut screwed to the fixing bolt, including: a fixing bolt hole which is formed in the first bracket and to which the fixing bolt is inserted; an anti-loosening hole formed in the first bracket; and a washer which has an insertion hole to which the fixing bolt is inserted and is arranged between the first bracket and the nut, in which the washer has a first arm and a second arm, which extend in a radial direction with respect to the insertion hole, and a locking portion which is formed in the first arm and is locked with the anti-loosening hole, a plurality of the second arms are provided, and among the plurality of second arms, one second arm is arranged such that a line L1 connecting a center of one side of the nut and a center of the nut coincides with a center line L2 connecting a center of the one second arm and the center of the nut, and in such an arrangement, another second arm is arranged such that a line L3 connecting a center of another side of the nut and the center of the nut is shifted from a center line L4 connecting a center of the another second arm and the center of the nut.

### Advantageous Effects of Invention

According to the present invention, it is possible to provide the bracket support device that prevents the anti-loosening of the nut and improves the attachment workability of a device or the like.

In addition, according to the present invention, it is possible to provide the bracket support device capable of locking the nut regardless of the tightening stop position of the nut.

### Brief Description of Drawings

[FIG. 1] FIG. 1 is a plan view illustrating a bracket attachment device according to a first embodiment of the present invention.
[FIG. 2] FIG. 2 is a side view of a bracket illustrated in FIG. 1.
[FIG. 3] FIG. 3 is a plan view of an anti-loosening washer illustrated in FIG. 1.
[FIG. 4] FIG. 4 is a side view of the anti-loosening washer illustrated in FIG. 1.
[FIG. 5] FIG. 5 is an explanatory view of the anti-loosening washer illustrated in FIG. 3.
[FIG. 6] FIG. 6 is a cross-sectional view of an elevator apparatus to which a bracket support structure illustrated in FIG. 1 is applied.
[FIG. 7] FIG. 7 is a plan view illustrating a bracket attachment device according to a second embodiment of the present invention.

### Description of Embodiments

Hereinafter, embodiments of the present invention will be described with reference to the accompanying drawings. In the following description, an example applied to an elevator will be described.

### [First Embodiment]

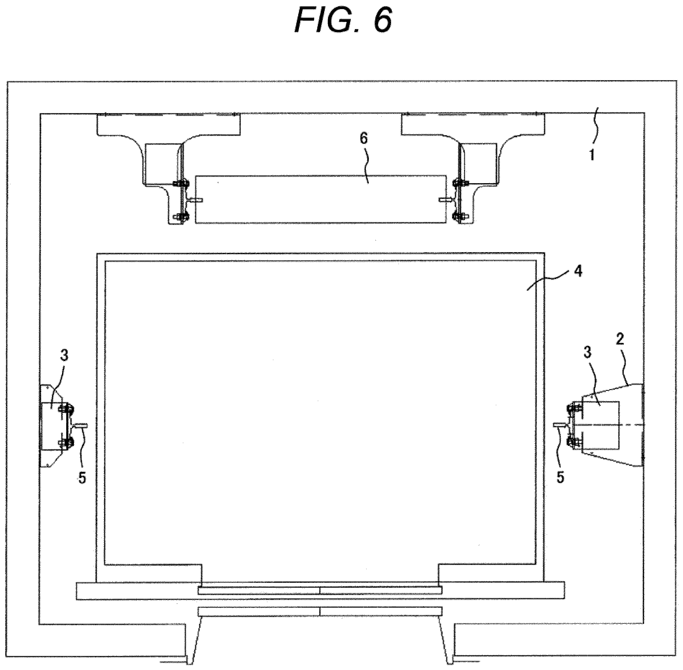

FIG. 6 is a plan view of an elevator apparatus using a bracket support device according to an embodiment of the present invention. In the present embodiment, the bracket support device is applied to a rail-side bracket that supports a guide rail in the elevator apparatus. A pair of bracket support devices are attached to the left and right of a hoistway wall 1. Since the pair of bracket support devices have substantially the same configuration, the right bracket support device will be described in detail as an example, hereinafter.

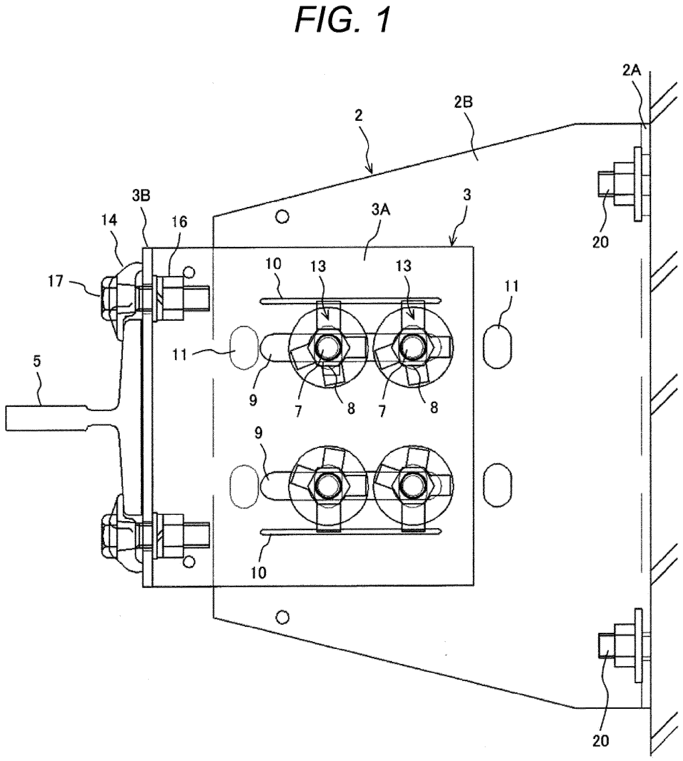

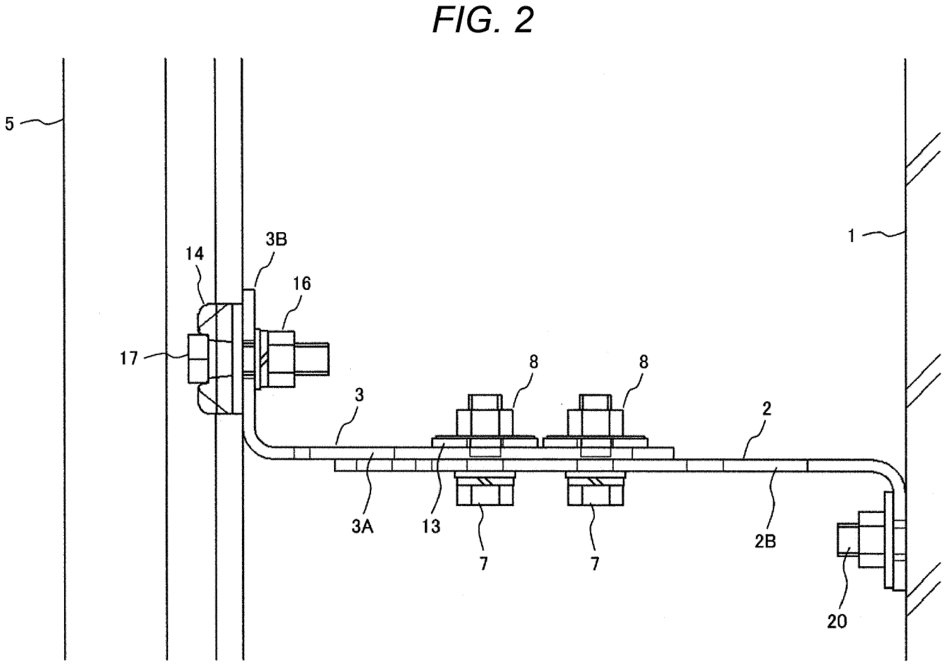

A wall-side bracket 2 (second bracket) is fixed to the hoistway wall 1 by anchor bolts 20 (FIGS. 1 and 2). A rail-side bracket 3 (first bracket) is fixed to the wall-side bracket 2 with fixing bolts. A guide rail 5 that guides raising and lowering of a car 4 is fixed to the rail-side bracket 3. In addition, a guide rail that guides a counterweight 6 is also fixed to the hoistway wall 1, and the elevator apparatus is configured such that the car 4 and the counterweight 6 connected by a rope move in the manner of a pulley.

Next, the bracket support device will be described with reference to FIGS. 1 and 2. FIG. 1 is a plan view illustrating the main part of the bracket support device (a plan view when the elevator apparatus is viewed from above). FIG. 2 is a side view illustrating the main part of the bracket support device (a side view when the elevator apparatus is viewed from the front).

The wall-side bracket 2 is configured on an L-shaped cross section as a whole, and has a vertical portion 2A arranged along a surface of the hoistway wall 1 and a horizontal portion 2B formed by folding the vertical portion 2A to be substantially horizontal. The vertical portion 2A of the wall-side bracket 2 is fixed to the hoistway wall 1 by the anchor bolt 20.

The rail-side bracket 3 is fixed to an upper surface side of the horizontal portion 2B of the wall-side bracket 2. The wall-side bracket 2 supports the rail-side bracket 3, and thus, is formed to be wider than the rail-side bracket 3 (a dimension comparison in the up-down direction in FIG. 1). The rail-side bracket 3 is also configured to have an L-shaped cross section, and has a horizontal portion 3A placed on the upper surface side of the horizontal portion 2B and a vertical portion 3B formed such that the guide rail 5 side is substantially vertical. The guide rail 5 that guides the car 4 is fixed to the vertical portion 3B of the rail-side bracket 3. A plurality of bolt holes are formed in the vertical portion 3B of the rail-side bracket 3. The guide rail 5 is fixed as follows. First, a rail clip 14 straddling the vertical portion 3B and the guide rail 5 is prepared and arranged on the guide rail 5 side. Next, the fixing bolt 17 inserted from the guide rail 5 side passes through the rail clip 14 and the bolt hole formed in the vertical portion 3B, and a nut 16 is tightened to fix the guide rail 5 to the rail-side bracket 3.

The wall-side bracket 2 and the rail-side bracket 3 are fixed using a plurality of fixing bolts 7 and nuts 8 inserted from the lower side of the wall-side bracket 2. The horizontal portion 3A of the rail-side bracket 3 has a pair of fixing bolt slotted holes 9 formed extending in a direction of contacting and separating from the guide rail 5, and a pair of anti-loosening slotted holes 10 formed to be substantially parallel on the outer side of each of the fixing bolt slotted holes 9. On the other hand, the wall-side bracket 2 has a plurality of fixing bolt slotted holes 11 formed to be long in a width direction orthogonal to a longitudinal direction of the fixing bolt slotted hole 9 and formed discretely along the fixing bolt slotted holes 9.

The fixing bolt slotted hole 11 in a positional relationship to overlap the fixing bolt slotted hole 9 is selected while considering the correspondence between wall-side bracket 2 and rail-side bracket 3, and the fixing bolt 7 is inserted into the selected fixing bolt slotted hole 11. Subsequently, the fixing bolt 7 passes through the fixing bolt slotted hole 9 in the rail-side bracket 3, and the nut 8 is tightened to an insertion-side end through an anti-loosening washer 13 (washer) to be described in detail later. Here, a case in which two fixing bolts 7 are used inside one fixing bolt slotted hole 9, and a pair of similar configurations are provided is illustrated. The two fixing bolts 7 are inserted and arranged in each of the fixing bolt slotted holes 9.

As described above, the pair of fixing bolt slotted holes 9 is formed to extend in the direction of contacting and separating from the guide rail 5, and the fixing bolt slotted holes 11 are formed to be long in the direction orthogonal the above direction, and thus, it is possible to adjust a coupling position of the rail-side bracket 3 in the wall-side bracket 2 while enabling adjustment of the positional relationship of the guide rail 5.

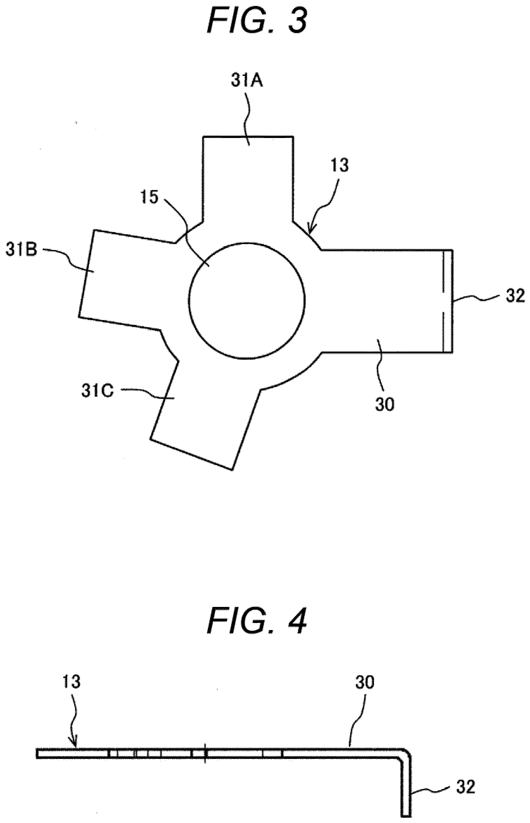

FIGS. 3 and 4 are a plan view and a side view illustrating the anti-loosening washer 13 used together with the fixing bolt 7 illustrated in FIG. 1.

The anti-loosening washer 13 has an insertion hole 15 formed at the center thereof and configured for insertion of the fixing bolt 7, a first arm 30 extending in the radial direction with respect to the insertion hole 15, and a plurality of foldable second arms 31A, 31B, and 31C having a predetermined angle with respect to the insertion hole 15 and extending substantially in the radial direction. A locking portion 32, which is folded downward as illustrated in FIG. 4 and fitted into the anti-loosening slotted hole 10 illustrated in FIG. 1, is formed at an end of the first arm 30.

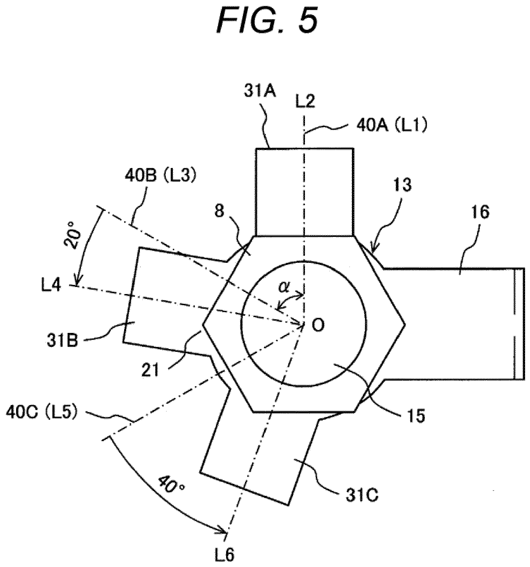

FIG. 5 is a view illustrating a relationship of the anti-loosening washer 13 illustrating the relationship between the second arms 31A, 31B, and 31C and the nut 8. In general, a washer is often used as a loosening stopper of a bolt by utilizing a frictional resistance with a nut to be tightened. The plurality of second arms 31A, 31B, and 31C that are foldable so as to come into contact with an outer peripheral portion of the nut 8 are formed on the anti-loosening washer 13 of the present embodiment. Although the three second arms 31A, 31B, and 31C are used as an example in the present embodiment, the number of arms is not limited thereto. The second arms 31A, 31B, and 31C are formed so as to be shifted so as not to simultaneously correspond to corners 21 of the respective sides formed on the outer peripheral portion of the nut 8.

At the hexagonal outer peripheral portion of the nut 8 screwed to the fixing bolt 7. The respective linear sides of the nut 8 are formed in accordance with virtual radial lines 40A, 40B, and 40C drawn at intervals of 60 degrees from a center O of the nut 8. However, a rotation angle of the nut 8 in a state where tightening is completed is not known. Therefore, at least one of the three second arms 31A, 31B, and 31C is arranged so as to correspond to the side of the hexagonal outer peripheral portion of the nut 8.

In a state where a line L1 (40A) connecting the center O of the nut 8 (center of the insertion hole 15) and a center of one side of the nut 8 coincides with a center line L2 connecting the center O of the nut 8 and a center of the second arm 31A, the other second arm 31B is arranged such that a line L3 (40B) connecting the center O of the nut 8 and a center of another side of the nut 8 is shifted from a center line L4 (center line L4 of the second arm 31B) connecting the center of the nut 8 and a center of the other second arm 31B. Similarly, the other second arm 31B is arranged such that a line L5 (40C) connecting the center O of the nut 8 and a center of an other side of the nut 8 is shifted from a center line L6 (center line L6 of the second arm 31C) connecting the center O of the nut 8 and the center of the other second arm 31C.

Specifically, the center line L4 of the second arm 31B is arranged to have an angle shifted by 20 degrees with respect to the virtual radial line 40B (L3) extending from the center O of the nut 8 (center of the insertion hole 15) to the center of the other side of the nut 8. Meanwhile, the shift angle is set so as to prevent overlapping between L4 and 15, and thus, the shift angle from L3 is set to be smaller than 60 degrees in the present embodiment. That is, the shift angle is set to an angle (α × n) such that an angle α, formed between the line L1 (40A) connecting the center O of the nut 8 and the center of one side of the nut 8 and the line L3 (40B) connecting the center O of the nut 8 and the center of the other side of the nut 8 is not an integer multiple n.

Further, the center line L6 of the second arm 31C is arranged to be shifted by 40 degrees with respect to the virtual radial line 40C (L5) extending from the center O of the nut 8 (center of the insertion hole 15) to the center of the other side of the nut 8. That is, the center lines L4 and L6 of the second arms 31B and 31C are shifted by 20 degrees from the virtual radial lines 40B (L3) and 40C (L5), respectively (the center line L6 of the second arm 31C is shifted by 40 degrees with respect to the virtual radial line 40C (L5) by adding the shift angle of 20 degrees of the center line L4 of the second arm 31B to the shift angle of 20 degrees of the center line L6 of the second arm 31C).

With this configuration, it is possible to avoid that all the three second arms 31A, 31B, and 31C simultaneously correspond to the corners of the respective sides of the hexagonal outer peripheral portion of the nut 8, and thus, the same corner does not become an obstacle so that an anti-loosening effect is not impaired when folding the three second arms 31A, 31B, and 31C. The meaning of avoiding that all the three second arms 31A, 31B, and 31C simultaneously correspond to the corners of the respective sides of the hexagonal outer peripheral portion of the nut 8 means that all the center lines L2, L4, and L6 connecting the center O of the nut 8 and the centers of the second arms 31A, 31B, and 31C do not simultaneously overlap the corners of the nut 8. When the center line L2, L4, and L6 overlap the corners of the nut 8, it is necessary to fold any of the second arms 31A, 31B, and 31C on right and left sides with the center lines L2, L4, and L6 as boundaries. In this case, the effect as the loosening stopper is weak. Therefore, it is necessary to prevent all the center lines L2, L4, and L6 simultaneously from overlapping the corners of the nut 8. In the present embodiment, all the center lines L2, L4, and L6 are shifted by 20 degrees with respect to the virtual radial line 40A, 40B, and 40C, respectively, and thus, do not simultaneously overlap the corners of the nut 8. When folding the second arm 31A, 31B, and 31C, it is preferable to select one of the second arms 31A, 31B, and 31C that has the largest distance between each of the center lines L2, L4, and L6 and each of the corners of the nut 8.

For example, when the second arm 31A in the correspondence is folded upward so as to contact a side of the hexagonal outer peripheral portion after tightening and fixing the nut 8, the second arm 31A of the anti-loosening washer 13 prevents rotation, that is, loosening of the nut 8. At this time, the other two second arms 31B and 31C may be left without any change, and the second arms 31B and 31C may be folded downward to be inserted into the fixing bolt slotted hole 9, for example, when the second arms 31B and 31C are positioned so as not to overlap the rail-side bracket 3 on the fixing bolt slotted hole 9. In this case, edges of the second arms 31B and 31C and the fixing bolt slotted hole 9 come into contact with each other so that the effect of preventing the nut 8 from loosening is further improved.

Next, attachment work of the bracket will be described. As illustrated in FIGS. 1 and 2, the fixing bolt 7 is inserted into the fixing bolt slotted hole 9 from the lower side of the wall-side bracket 2. At this time, the insertion-side end of the fixing bolt 7 passes through the insertion hole 15 in the anti-loosening washer 13 illustrated in FIG. 3, and the locking portion 32 provided in the anti-loosening washer 13 (first arm 30) is arranged so as to be fitted into the anti-loosening slotted hole 10 illustrated in FIG. 1. Next, the nut 8 is screwed to the insertion-side end of the fixing bolt 7 to be in a temporarily fixed state.

In this temporarily fixed state, alignment work of the rail-side bracket 3 and the guide rail 5 is performed. At this time, the alignment of the guide rail 5 in the longitudinal direction is performed on the rail clip 14 side, and there alignment thereof in the direction of contacting and separating from the hoistway wall 1 can be performed while moving the fixing bolt 7 along the fixing bolt slotted hole 9 illustrated in FIG. 1. At this time, the locking portion 32 of the first arm 30 also moves along the anti-loosening slotted hole 10 illustrated in FIG. 1, and thus, the alignment work can be easily performed with a simple configuration using the slotted hole. In addition, a position in the width direction of the rail-side bracket 3 with respect to the wall-side bracket 2 can be adjusted within a range of the fixing bolt slotted hole 11 provided in the wall-side bracket 2. At this time, a position of the fixing bolt 7 changes in the fixing bolt slotted hole 11 depending on a length of the rail-side bracket 3, and a position of the anti-loosening washer 13 can also be moved in accordance with the position of the fixing bolt 7 by providing the anti-loosening slotted hole 10.

When the alignment work is completed, the nut 8 is tightened with a predetermined torque using a torque wrench. In this state, the locking portion 32 of the anti-loosening washer 13 is locked in the anti-loosening slotted hole 10, and the anti-loosening washer 13 is prevented from rotating. Moreover, since the nut 8 and the anti-loosening washer 13 are pressed to contact with each other by tightening the nut 8, the nut 8 is prevented from loosening.

Thereafter, a distal end of at least one of the plurality of second arms 31A, 31B, and 31C in the anti-loosening washer 13 illustrated in FIG. 3, that is, the second arm 31A in the present embodiment, is folded to come into contact with one outer peripheral side of the nut 8. In this state, the nut 8 and the anti-loosening washer 13 are more reliably coupled, and the nut 8 is prevented from loosening.

Although the bracket support structure in the elevator apparatus that fixes the rail-side bracket 3 supporting the guide rail 5 with the fixing bolt 7 has been described in the above embodiment, the configuration of the present embodiment can be applied to other general bracket support devices. In addition, when the strength in the fixing of the rail-side bracket 3 is insufficient, the wall-side bracket 2 and the rail-side bracket 3 or the anti-loosening washer 13 and the rail-side bracket 3 can be welded after tightening the fixing bolt 7. Although the case where the brackets are coupled using the four fixing bolts 7 is illustrated in the present embodiment, but the present invention can be applied regardless of the number of bolts.

As described above, according to the embodiment, in the bracket support device that fixes the rail-side bracket 3 with the fixing bolt 7, the rail-side bracket 3 is provided with the fixing bolt slotted holes 9 formed to extend in the position adjustment direction and the anti-loosening slotted holes 10 formed to be substantially parallel along the fixing bolt slotted holes 9, the insertion-side distal end of fixing bolt 7, inserted into the fixing bolt slotted hole 9, passes through the insertion hole 15 of the anti-loosening washer 13 to be screwed with the nut 8, and the first arm 30 that prevents the rotation by positioning the locking portion 32 in the anti-loosening slotted hole 10 is formed in the anti-loosening washer 13.

According to such a configuration, the position of the anti-loosening washer 13 can be moved in accordance with the position of the fixing bolt 7 even if the position of the fixing bolt 7 changes in the fixing bolt slotted hole 11. The rotation of the anti-loosening washer 13 is prevented by the locking portion 32 of the first arm 30 inserted into the anti-loosening slotted hole 10 while maintaining a position adjustment function with the fixing bolt slotted hole 9 and the anti-loosening slotted hole 10, and it is possible to prevent the fixing bolt 7 from being loosened over time. Accordingly, it is possible to remove the need for periodic inspection work on loosening of the fixing bolt 7 and to increase an interval for performing the inspection work.

In addition, the second arm 31A that is foldable so as to come into contact with the outer peripheral portion of the nut 8 is formed in the anti-loosening washer 13 in addition to the above-described configuration in the present embodiment. According to such a configuration, the folded second arm 31A comes into contact with the outer peripheral portion of the nut 8 so that the rotation of the nut 8 is prevented, and thus, the loosening of the nut 8 (fixing bolt 7) can be more reliably prevented.

Further, the three second arms 31A, 31B, and 31C that are foldable so as to come into contact with the outer peripheral portion of the nut 8 are formed in the anti-loosening washer 13, and the second arms 31A, 31B, and 31C are formed to be shifted so as not to correspond to the corners of the respective sides formed on the outer peripheral portion of the nut 8 in addition to the above-described configuration in the present embodiment. According to such a configuration, even if a rotational position of the nut 8 at the time of completion of tightening changes, any of the plurality of second arms 31A, 31B, and 31C can be folded to come into contact with the side of the outer peripheral portion of the nut 8 so that the loosening of the nut 8 (fixing bolt 7) can be more reliably prevented.

In addition, the rail-side bracket 3 is the rail-side bracket that fixes the guide rail 5 and is arranged such that the horizontal portion 3A thereof is placed on the horizontal portion 2B formed on the wall-side bracket 2 fixed to the hoistway wall 1, and the rail-side bracket 3 is provided with the fixing bolt slotted holes 9, formed to extend in the direction in which the guide rail 5 contacts and separates from the hoistway wall 1, and the anti-loosening slotted holes 10 formed to be substantially parallel along the fixing bolt slotted holes 9, and is provided with the anti-loosening washer 13 that fixes the rail-side bracket 3 to the wall-side bracket 2 using the fixing bolt 7 inserted in the fixing bolt slotted hole 9 with the insertion-side end of the fixing bolt 7 passing through the insertion hole 15.

According to such a configuration, the rotation of the anti-loosening washer 13 is prevented by the locking portion 32 of the first arm 30 inserted into the anti-loosening slotted hole 10 while enabling the position adjustment of the guide rail 5 with the fixing bolt slotted hole 9 and the anti-loosening slotted hole 10, and it is possible to prevent the fixing bolt 7 from being loosened over time.

### [Second Embodiment]

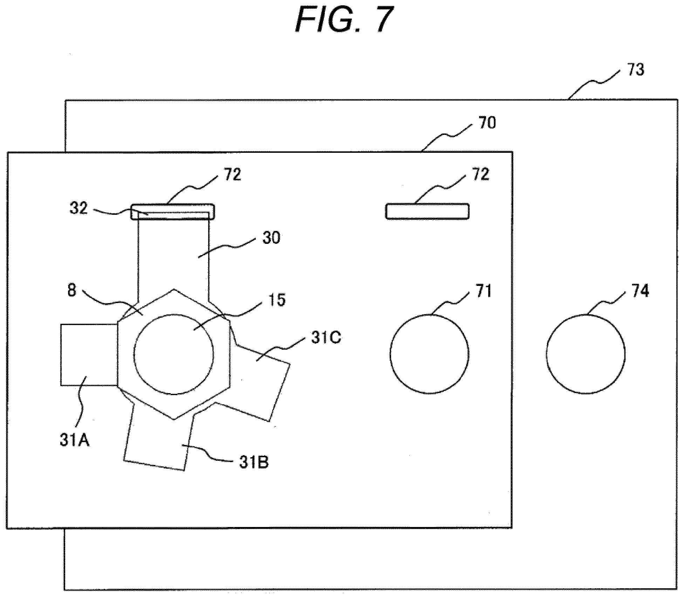

Next, a second embodiment according to the present invention will be described with reference to FIG. 7. FIG. 7 is a plan view illustrating a bracket support device according to the second embodiment of the present invention. A fixing bolt hole 71 through which a fixing bolt passes, and an anti-loosening hole 72 are formed in a first bracket 70. A fixing bolt hole 74 is formed in a second bracket 73. The number of each of the fixing bolt hole 71, anti-loosening hole 72, and fixing bolt hole 74 may be one or plural, and the number may be selected according to the purpose. A difference from the above first embodiment is shapes of the fixing bolt hole 71 and the anti-loosening hole 72. Although each hole is formed as the continuously slotted hole so that the fixing bolt can be moved in the first embodiment, the movement of the fixing bolt is restricted since the hole is independent in the second embodiment.

Next, attachment work of the bracket will be described. The fixing bolt is inserted into the fixing bolt hole 74 from the second bracket 73 side. The fixing bolt having passed through the fixing bolt hole 74 passes through the fixing bolt hole 71 and the insertion hole 15 in the anti-loosening washer 13, and the locking portion 32 provided in the anti-loosening washer 13 (first arm 30) is arranged so as to be fitted into the anti-loosening hole 72. Next, the nut 8 is screwed to an insertion-side end of the fixing bolt. The tightening of the nut 8 is tightened with a predetermined torque using a torque wrench or the like.

In this state, the locking portion 32 of the anti-loosening washer 13 is locked in the anti-loosening hole 72 so that the anti-loosening washer 13 is prevented from rotating. Moreover, since the nut 8 and the anti-loosening washer 13 are pressed to contact with each other by tightening the nut 8, the nut 8 is prevented from loosening.

Thereafter, a distal end of at least one of the plurality of second arms 31A, 31B, and 31C in the anti-loosening washer 13 illustrated in FIG. 3, that is, the second arm 31A in the present embodiment, is folded to come into contact with one outer peripheral side of the nut 8. In this state, the nut 8 and the anti-loosening washer 13 are more reliably coupled, and the nut 8 is prevented from loosening. The configuration of the anti-loosening washer 13 is the same as that of the first embodiment.

According to the present embodiment, the rotation of the anti-loosening washer 13 is prevented by the locking portion 32 of the first arm 30 inserted into the anti-loosening hole 72, and it is possible to prevent the fixing bolt from being loosened over time. Accordingly, it is possible to remove the need for periodic inspection work on loosening of the fixing bolt and to increase an interval for performing the inspection work.

In addition, the second arm 31A that is foldable so as to come into contact with the outer peripheral portion of the nut 8 is formed in the anti-loosening washer 13 in addition to the above-described configuration in the present embodiment. According to such a configuration, the folded second arm 31A comes into contact with the outer peripheral portion of the nut 8 so that the rotation of the nut 8 is prevented, and thus, the loosening of the nut 8 (fixing bolt 7) can be more reliably prevented.

Further, the three second arms 31A, 31B, and 31C that are foldable so as to come into contact with the outer peripheral portion of the nut 8 are formed in the anti-loosening washer 13, and the second arms 31A, 31B, and 31C are formed to be shifted so as not to correspond to the corners of the respective sides formed on the outer peripheral portion of the nut 8 in addition to the above-described configuration in the present embodiment. According to such a configuration, even if a rotational position of the nut 8 at the time of completion of tightening changes, any of the plurality of second arms 31A, 31B, and 31C can be folded to come into contact with the side of the outer peripheral portion of the nut 8 so that the loosening of the nut 8 (fixing bolt 7) can be more reliably prevented.

The present invention is not limited to the above-described first and second embodiments, and includes various modifications. The above-described embodiments have been described in detail in order to describe the present invention in an easily understandable manner, and are not necessarily limited to one including the entire configuration that has been described above. In addition, a part of the configuration of a certain embodiment can be also replaced with another configuration. For example, even if there is a change in the number of bolts, the invention can be applied in the same manner.

### Reference Signs List

- 1: hoistway wall
- 2: wall-side bracket
- 3: rail-side bracket
- 7: fixing bolt
- 8: nut
- 9: fixing bolt slotted hole
- 10: anti-loosening slotted hole
- 13: anti-loosening washer
- 15: insertion hole
- 30: first arm
- 31A: second arm
- 31B: second arm
- 31C: second arm
- 40A: virtual radial line
- 40B: virtual radial line
- 40C: virtual radial line
- 70: first bracket
- 71, 74: fixing bolt hole
- 72: anti-loosening hole
- 73: second bracket

## Claims

1. A bracket support device that fixes a first bracket and a second bracket by a fixing bolt and a nut screwed to the fixing bolt, the bracket support device comprising:
a fixing bolt slotted hole to which the fixing bolt is inserted and which is formed in the first bracket so as to extend in a position adjustment direction;
an anti-loosening slotted hole formed in the first bracket along the fixing bolt slotted hole; and
a washer arranged between the first bracket and the nut,
wherein the washer has a locking portion to be locked with the anti-loosening slotted hole.

2. The bracket support device according to claim 1, wherein the washer has a first arm having a locking portion and a second arm that is folded toward the nut to come into contact with one side of the nut.

3. The bracket support device according to claim 2, wherein a plurality of the second arms are provided.

4. The bracket support device according to claim 3, wherein in a state where, among the plurality of second arms, one second arm is in contact with one side of the nut, another second arm is arranged so as to face a corner of the nut.

5. The bracket support device according to claim 3, wherein in a state where, among the plurality of second arms, one second arm is in contact with one side of the nut, a line L1 connecting a center of the one side of the nut that is in contact and a center of the nut coincides with a center line L2 connecting a center of the one second arm and the center of the nut.

6. The bracket support device according to claim 5, wherein when a line connecting a center of another side, which is not in contact with the one second arm, of the nut and the center of the nut is L3, and a center line connecting a center of another second arm among the plurality of second arms and the center of the nut is L4, the other second arm is arranged such that L3 is shifted from L4.

7. The bracket support device according to claim 6, wherein the nut is hexagonal, and L4 is shifted by 20 degrees with respect to L3.

8. The bracket support device according to any one of claims 1 to 7, wherein
the first bracket is a rail-side bracket that fixes a guide rail of an elevator,
the second bracket is a wall-side bracket fixed to a hoistway wall, and
a horizontal portion of the rail-side bracket is arranged to be placed on a horizontal portion formed on the wall-side bracket.

9. A bracket support device that fixes a first bracket and a second bracket by a fixing bolt and a nut screwed to the fixing bolt, the bracket support device comprising:
a fixing bolt hole which is formed in the first bracket and to which the fixing bolt is inserted;
an anti-loosening hole formed in the first bracket; and
a washer which has an insertion hole to which the fixing bolt is inserted and is arranged between the first bracket and the nut,
wherein the washer has a first arm and a second arm, which extend in a radial direction with respect to the insertion hole, and a locking portion which is formed in the first arm and is locked with the anti-loosening hole,
a plurality of the second arms are provided, and
among the plurality of second arms, one second arm is arranged such that a line L1 connecting a center of one side of the nut and a center of the nut coincides with a center line L2 connecting a center of the one second arm and the center of the nut, and in such an arrangement, another second arm is arranged such that a line L3 connecting a center of another side of the nut and the center of the nut is shifted from a center line L4 connecting a center of the other second arm and the center of the nut.

10. The bracket support device according to claim 9, wherein the nut is hexagonal, and L4 is shifted by 20 degrees with respect to L3.
